# EUROPÄISCHE PATENTSCHRIFT

(11) **EP 1 060 932 B1**
(45) Veröffentlichungstag und Bekanntmachung des Hinweises auf die Patenterteilung: **08.12.2004**
(21) Anmeldenummer: 00110138.5
(22) Anmeldetag: 11.05.2000
(51) Int. Cl.: B60K 5/00, B60K 13/02, F16F 7/10

(54) **Antriebsaggregat mit Schwingungstilgung**
Propulsive power unit with vibration mass damper
Groupe moto-propulseur avec armortisseur à masse de vibrations

(30) Priorität: 17.06.1999 DE 19927768
(43) Veröffentlichungstag der Anmeldung: 20.12.2000
(73) Patentinhaber: Volkswagen Aktiengesellschaft, 38436 Wolfsburg (DE)
(72) Erfinder: Sellschopp, Jürgen, Dipl.-Ing., 38122 Braunschweig (DE); Landsberg, Christine, 38108 Braunschweig (DE)

(56) Entgegenhaltungen:
- EP-A- 0 352 760
- EP-A- 0 514 646
- DE-A- 4 343 373
- DE-C- 4 413 393
- FR-A- 2 724 419
- US-A- 4 901 681

## Beschreibung

Die Erfindung betrifft ein Antriebsaggregat, insbesondere eines Kraftfahrzeuges, mit einem Motor, einem Getriebe, wenigstens einer schwingungsdämpfenden Tilgermasse sowie einer Sauganlage, gemäß dem Oberbegriff des Anspruchs 1. Ein derartiges Antriebsaggregat ist allgemein bekannt.

Bei in Kraftfahrzeugen verbauten Antriebseinheiten aus Motor und Getriebe stellen sich im Fahrbetrieb Biegeschwingungen bzw. Biegeeigenformen des Gesamtaggregats ein, wobei insbesondere eine erste Biegeeigenform dominant ist. Je nach Fahrzeugtyp und Fahrzeuggröße weist diese Schwingung erster Ordnung verschiedene Frequenzen auf. Bei Geländefahrzeugen kann sie beispielsweise ca. 80 Hz betragen, bei Oberklasselimousinen etwa 120 bis 150 Hz, bei Mittelklasselimousinen um 200 Hz und bei quer eingebautem Aggregat etwa 200 bis 250 Hz. Zur Eindämmung dieser Schwingungen ist es bekannt, am abtriebsseitigen Ende des Getriebes zusätzliche Massen, sogen. Tilgermassen, mit einer Masse von ca. 3 bis 5 kg anzuordnen. Dies führt jedoch zu einem zusätzlichen Gewicht und es sind bei der Montage zusätzliche Bauteile zu befestigen.

Der vorliegenden Erfindung liegt daher die Aufgabe zugrunde, ein verbessertes Antriebsaggregat der obengenannten Art zur Verfügung zu stellen, welches die obengenannten Nachteile beseitigt und eine einfache und wirksame Schwingungstilgung umfaßt.

Diese Aufgabe wird erfindungsgemäß durch ein Antriebsaggregat der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß wenigstens ein Teil der Sauganlage derart ausgebildet und mit dem Motor verbunden ist, daß dieser Teil die Tilgermasse ausbildet.

Dies hat den Vorteil, daß mit im wesentlichen reduzierten separaten Tilgermassen oder sogar ohne separate Tilgermassen eine Reduzierung von Aggregatebiegeschwingungen erzielt wird. Dadurch, daß bereits vorhandene Bauteile als Tilgermassen an den Motor angekoppelt werden, reduzieren sich Montageaufwand sowie Gewicht des Antriebsaggregats.

Zweckmäßigerweise ist der die Tilgermasse ausbildende Teil der Sauganlage ein Saugrohr, ein Luftfiltergehäuse und/oder ein Luftsammler.

In einer bevorzugten Ausführungsform ist der die Tilgermasse ausbildende Teil der Sauganlage mittels wenigstens einem elastischen Bauteil mit dem Motor verbunden, wobei das elastischen Bauteiles derart ausgebildet ist, daß der die Tilgermasse ausbildende Teil der Sauganlage bzgl. des Motors mit einer Frequenz schwingt, welche im wesentlichen einer Biegeschwingungsfrequenz erster Ordnung von Motor und Getriebe entspricht. Beispielsweise ist das elastische Bauteil wenigstens eine Dichtung, insbesondere Gummidichtung, in einem Einlaßkanal zwischen Motor und Sauganlage oder wenigstens ein Federelement, insbesondere eine Spiral-, Teller- oder Gummifeder.

Der die Tilgermasse ausbildende Teil der Sauganlage ist beispielsweise als Starrkörper ausgebildet oder weist eine Eigenschwingung mit einer Frequenz auf, welche im wesentlichen einer Biegeschwingungsfrequenz erster Ordnung von Motor und Getriebe entspricht.

Alternativ ist der schwingende Teil der Sauganlage ein Saugrohr mit Saugrohrüberhang, wobei der Überhang eine Eigenfrequenz für einen Schwingung aufweist, welche im wesentlichen der Biegeschwingungsfrequenz erster Ordnung von Motor und Getriebe entspricht.

Zweckmäßigerweise ist der die Tilgermasse ausbildende Teil der Sauganlage mit einem Motorblock des Motors verbunden.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine schematische Veranschaulichung der Erfindung,
- Fig. 2: eine erste bevorzugte Ausführungsform eines erfindungsgemäßen Aggregats,
- Fig. 3: eine zweite bevorzugte Ausführungsform eines erfindungsgemäßen Aggregats,
- Fig. 4: eine dritte bevorzugte Ausführungsform eines erfindungsgemäßen Aggregats und
- Fig. 5: eine graphische Darstellung einer Amplitude über die Frequenz eines Schwingungsverhaltens eines Antriebsaggregats.

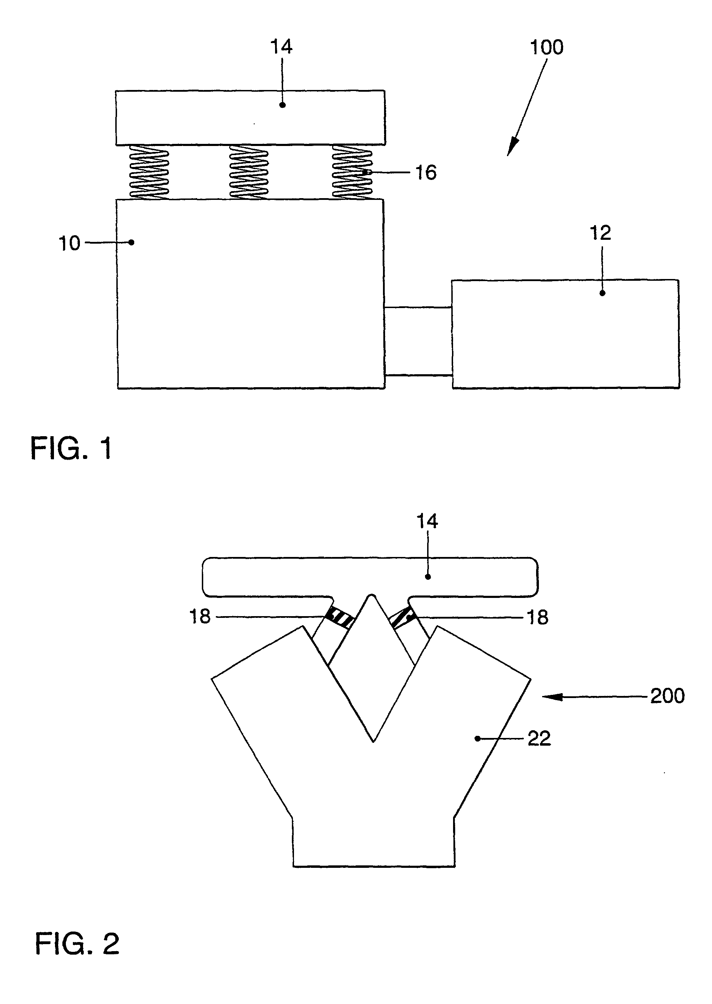

Wie aus Fig. 1 ersichtlich, ist bei einem Antriebsaggregat 100, welches einen Motor 10 und ein Getriebe 12 umfaßt, ein Saugrohr 14 über abgestimmte Federelemente 16 mit dem Motor 10 verbunden. Durch die gezielte Abstimmung der zusätzlichen Federelemente 16 wird eine Nutzung des Saugrohres 14 als Tilger bzw. Tilgermasse erzielt. Beispielsweise wird auf diese Weise eine ganze Saugrohranlage in ihrer Funktion der Luftzuführung um die Funktion einer Tilgermasse erweitert, so daß separate Tilgermassen entfallen können. Die üblicherweise verbauten Saugrohrmassen sind hierfür mehr als ausreichend.

Fig. 2 zeigt eine erste bevorzugte Ausführungsform eines erfindungsgemäßen Antriebsaggregats 200, bei der das Saugrohr 14 als im wesentlichen starrer Körper ausgebildet ist, welches über abgestimmte Dichtungen 18 im Bereich von Einlaßkanälen 20 mit einem Motorblock 22 des ansonsten nicht näher dargestellten Antriebsaggregats verbunden ist. Die Dichtungen 18 sind beispielsweise derart abgestimmt, daß das Saugrohr 14 bzgl. des Motorblockes 22 mit einer Frequenz von ca. 120 bis 150 Hz schwingt und so die Biegeresonanz des Antriebsaggregats tilgt. Hierzu sind Gummidichtungen und Federelemente in der abgestimmte Dichtungen 18 vereinigt, wobei diese ggf. zusätzliche Stahleinlagen zur Übernahme von Spiral-, Teller- oder Gummifederfunktionen aufweisen.

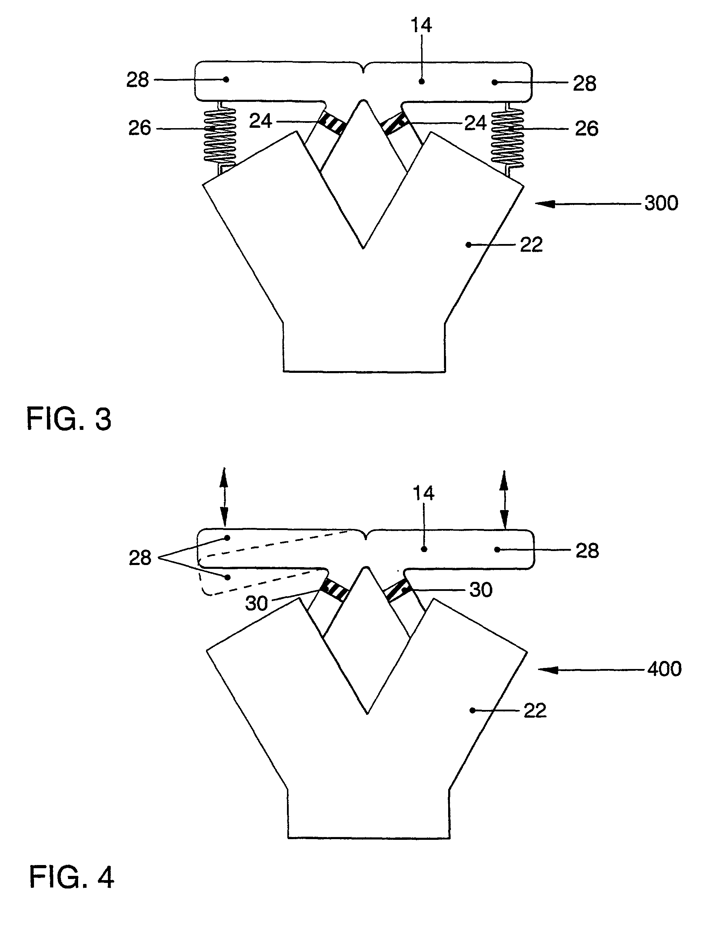

Fig. 3 zeigt eine zweite bevorzugte Ausführungsform eines erfindungsgemäßen Antriebsaggregats 300, bei der das Saugrohr 14 als im wesentlichen starrer Körper ausgebildet ist, welches über maximal weiche Gummidichtungen 24 unter maximaler Entkopplung Luft zuführt. Die Gummidichtungen 24 dienen daher in dieser Ausführungsform ausschließlich zur Schwingungsentkopplung, während zusätzliche, separate Spiral-, Telleroder Gummifedern 26 jeweilige Ausleger 28 des Saugrohres 14 mit dem Motorblock 22 derart verbinden, daß eine relative Auf- und Abbewegung gedämpft ist.

Fig. 4 zeigt eine dritte bevorzugte Ausführungsform eines erfindungsgemäßen Antriebsaggregats 400, bei der das Saugrohr 14 als im wesentlichen schwingungsfähiger Körper ausgebildet und mittels vergleichsweise harten Gummidichtungen 30 für eine maximale Ankoppelung am Motorblock 22 befestigt ist. Das Saugrohr 14 weist definierte "weiche" Stellen auf, mittels derer der Saugrohrüberhang 28 gezielt schwingen kann, wie mit gestrichelten Linien angedeutet. Die "weichen" stellen sind beispielsweise mittels Bereiche mit verminderter Wandstärke oder mittels einer Rippenkonstruktion ausgebildet.

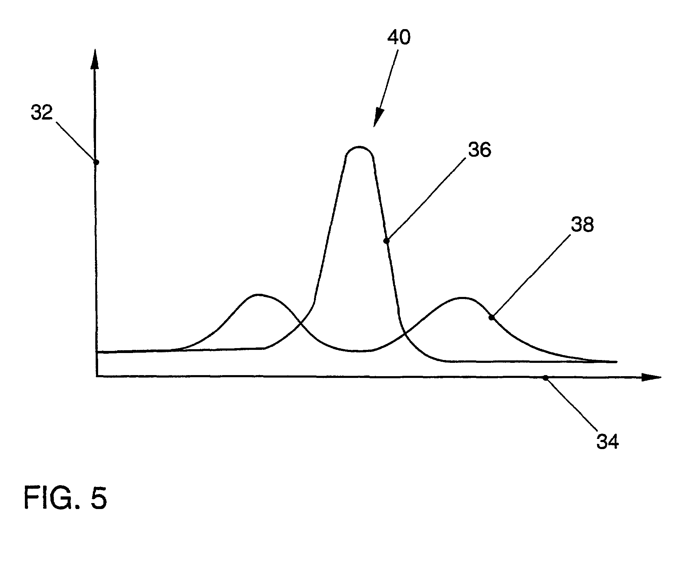

Fig. 5 veranschaulicht eine prinzipielle Wirkungsweise der Erfindung, wobei auf der vertikalen Achse 32 eine Amplitude einer Schwingung über die auf der horizontalen Achse 34 angegebene Frequenz aufgetragen ist. Die mit 36 bezeichnete Linie stellt den Verlauf der Amplitude in Abhängigkeit von der Frequenz für ein Antriebsaggregat ohne erfindungsgemäßer Schwingungstilgung dar. Hier ergibt sich ein Maximum 40 der Amplitude bei 130 Hz der Biegeschwingung erster Ordnung. Die mit 38 bezeichnete Linie veranschaulicht den Verlauf der Amplitude in Abhängigkeit von der Frequenz für ein Antriebsaggregat mit erfindungsgemäßer Schwingungstilgung.

Die Erfindung ist grundsätzlich bei Längs- und Quereinbau des Aggregats anwendbar. Bei Quereinbau ist die in Querrichtung liegende Erstreckung aus Motor 10 und Getriebe 12 zwar kürzer, aber dennoch liegen Biegeeigenformen bzw. Biegeschwingungen vor. Diese weisen lediglich eine höhere Frequenz auf, was bei der Dimensionierung der Tilgermasse bzw. der elastischen Elemente 16; 18; 26 entsprechend zu berücksichtigen ist. Zusätzlich sind auch Biegeeigenformen höherer Ordnung durch die Erfindung bekämpfbar bzw. bedämpfbar.

## Patentansprüche

1. Antriebsaggregat, insbesondere eines Kraftfahrzeuges, mit einem Motor (10), einem Getriebe (12), wenigstens einer schwingungsdämpfenden Tilgermasse sowie einer Sauganlage (14),
**dadurch gekennzeichnet, daß**
wenigstens ein Teil der Sauganlage (14) derart ausgebildet und mit dem Motor (10) verbunden ist, daß dieser Teil die Tilgermasse ausbildet.

2. Antriebsaggregat nach Anspruch 1,
**dadurch gekennzeichnet, daß**
der die Tilgermasse ausbildende Teil der Sauganlage (14) ein Saugrohr, ein Luftfiltergehäuse und/oder ein Luftsammler ist.

3. Antriebsaggregat nach Anspruch 1 oder 2,
**dadurch gekennzeichnet, daß**
der die Tilgermasse ausbildende Teil der Sauganlage (14) mittels wenigstens einem elastischen Bauteil (16; 18; 26) mit dem Motor verbunden ist, wobei das elastische Bauteil (16, 18; 26) derart ausgebildet ist, daß der die Tilgermasse ausbildende Teil der Sauganlage (14) bezüglich des Motors (10) mit einer Frequenz schwingt, welche im wesentlichen einer Biegeschwingungsfrequenz erster Ordnung von Motor (10) und Getriebe (12) entspricht.

4. Antriebsaggregat nach Anspruch 3,
**dadurch gekennzeichnet, daß**
das elastische Bauteil (18) wenigstens eine Dichtung, insbesondere Gummidichtung, in einem Einlaßkanal zwischen Motor und Sauganlage ist.

5. Antriebsaggregat nach Anspruch 3 oder 4,
**dadurch gekennzeichnet, daß**
das elastische Bauteil (16; 26) wenigstens ein Federelement, insbesondere eine Spiral-, Teller- oder Gummifeder, ist.

6. Antriebsaggregat nach einem der vorhergehenden Ansprüche,
**dadurch gekennzeichnet, daß**
der die Tilgermasse ausbildende Teil der Sauganlage (14) als Starrkörper ausgebildet ist.

7. Antriebsaggregat nach einem der Ansprüche 1 bis 5,
**dadurch gekennzeichnet, daß**
der die Tilgermasse ausbildende Teil der Sauganlage (14) derart ausgebildet ist, daß dieser eine Eigenschwingung mit einer Frequenz aufweist, welche im wesentlichen einer Biegeschwingungsfrequenz erster Ordnung von Motor (10) und Getriebe (12) entspricht.

8. Antriebsaggregat nach Anspruch 7,
**dadurch gekennzeichnet, daß**
der schwingende Teil der Sauganlage (14) ein Saugrohr mit Saugrohrüberhang (28) ist, wobei der Überhang (28) eine Eigenfrequenz für eine Schwingung aufweist, welche im wesentlichen der Biegeschwingungsfrequenz erster Ordnung von Motor (10) und Getriebe (12) entspricht.

9. Antriebsaggregat nach einem der vorhergehenden Ansprüche,
**dadurch gekennzeichnet, daß**
der die Tilgermasse ausbildende Teil der Sauganlage (14) mit einem Motorblock (22) des Motors (10) verbunden ist.

## Claims

1. Propulsive power unit, in particular of a motor vehicle, having an engine (10), a gearbox (12), at least one vibration-damping damper mass and an induction system (14), **characterized in that** at least part of the induction system (14) is designed and connected to the engine (10) in such a manner that this part forms the damper mass.

2. Propulsive power unit according to Claim 1, **characterized in that** that part of the induction system (14) which forms the damper mass is an induction pipe, an air filter housing and/or an air manifold.

3. Propulsive power unit according to Claim 1 or 2, **characterized in that** that part of the induction system (14) which forms the damper mass is connected to the engine by means of at least one elastic component (16; 18; 26), the elastic component (16, 18; 26) being designed in such a manner that that part of the induction system (14) which forms the damper mass vibrates with respect to the engine (10) at a frequency which corresponds essentially to a bending vibration frequency of the first order of the engine (10) and gearbox (12).

4. Propulsive power unit according to Claim 3, **characterized in that** the elastic component (18) is at least one seal, in particular rubber seal, in an inlet duct between the engine and induction system.

5. Propulsive power unit according to Claim 3 or 4, **characterized in that** the elastic component (16; 26) is at least one spring element, in particular a spiral, disc or rubber spring.

6. Propulsive power unit according to one of the preceding claims, **characterized in that** that part of the induction system (14) which forms the damper mass is designed as a rigid body.

7. Propulsive power unit according to one of Claims 1 to 5, **characterized in that** that part of the induction system (14) which forms the damper mass is designed in such a manner that it has a natural vibration at a frequency which corresponds essentially to a bending vibration frequency of the first order of the engine (10) and gearbox (12).

8. Propulsive power unit according to Claim 7, **characterized in that** the vibrating part of the induction system (14) is an induction pipe with an induction pipe overhang (28), the overhang (28) having a natural frequency for a vibration which corresponds essentially to the bending vibration frequency of the first order of the engine (10) and gearbox (12).

9. Propulsive power unit according to one of the preceding claims, **characterized in that** that part of the induction system (14) which forms the damper mass is connected to an engine block (22) of the engine (10).

## Revendications

1. Groupe moto-propulseur, notamment d'un véhicule automobile, avec un moteur (10), une transmission (12), au moins une masse d'amortissement des vibrations, ainsi qu'un système d'aspiration (14), **caractérisé en ce qu'**au moins une partie du système d'aspiration (14) est conçue et reliée avec le moteur (10) de façon à ce que cette partie forme la masse d'amortissement.

2. Groupe moto-propulseur selon la revendication 1, **caractérisé en ce que** la partie du système d'aspiration (14) formant la masse d'amortissement est un tube aspirant, un boîtier d'un filtre à air et/ou un collecteur d'air.

3. Groupe moto-propulseur selon la revendication 1 ou 2, **caractérisé en ce que** la partie du système d'aspiration (14) formant la masse d'amortissement est reliée au moteur par l'intermédiaire d'au moins un élément élastique (16 ; 18; 26),l'élément élastique (16 ; 18 ; 26) étant conçu de façon à ce que la partie du système d'aspiration (14) formant la masse d'amortissement vibre par rapport au moteur (10) à une fréquence correspondant sensiblement à une fréquence de vibrations de flexions de premier ordre du moteur (10) et de la transmission (12).

4. Groupe moto-propulseur selon la revendication 3, **caractérisé en ce que** l'élément élastique (18) est au moins un joint, notamment un joint en caoutchouc, dans une conduite d'entrée entre le moteur et le système d'aspiration.

5. Groupe moto-propulseur selon la revendication 3 ou 4,
**caractérisé en ce que** l'élément élastique (16; 26) est au moins un élément à ressort, notamment un ressort hélicoïdal, un ressort à disque ou un ressort en caoutchouc.

6. Groupe moto-propulseur selon l'une quelconque des revendications précédentes,
**caractérisé en ce que** la partie du système d'aspiration (14) formant la masse d'amortissement est conçue en tant qu'organe rigide.

7. Groupe moto-propulseur selon l'une quelconque des revendications 1 à 5, **caractérisé en ce que** la partie du système d'aspiration (14) formant la masse d'amortissement est conçue de façon à présenter une vibration propre avec une fréquence correspondant sensiblement à une fréquence de vibrations de flexions de premier ordre du moteur (10) et de la transmission (12).

8. Groupe moto-propulseur selon la revendication 7, **caractérisé en ce que** la partie vibrante du système d'aspiration (14) est un tube d'aspiration doté d'un surplomb de tube (28), le surplomb (28) présentant une fréquence propre pour une vibration correspondant sensiblement à la fréquence de vibrations de flexions de premier ordre du moteur (10) et de la transmission (12).

9. Groupe moto-propulseur selon l'une quelconque des revendications précédentes,
**caractérisé en ce que** la partie du système d'aspiration (14) formant la masse d'amortissement est reliée à un bloc moteur (22) du moteur (10).
